# FASCICULE DE BREVET EUROPEEN

(11) **EP 3 308 121 B1**
(45) Date de publication et mention de la délivrance du brevet: **04.08.2021**
(21) Numéro de dépôt: 16727508.0
(22) Date de dépôt: 07.06.2016
(51) Int. Cl.: G01L 7/08, G01L 19/06, G01L 19/14

(54) **DISPOSITIF DE DÉTECTION DE PRESSION À DÉCOUPLAGE MÉCANIQUE**
VORRICHTUNG ZUR ERMITTLUNG DES MECHANISCHEN ENTKOPPLUNGSDRUCKS
DEVICE FOR DETECTING MECHANICAL DECOUPLING PRESSURE

(30) Priorité: 12.06.2015 FR 1555411
(43) Date de publication de la demande: 18.04.2018
(60) Demande divisionnaire: 18175491.2
(73) Titulaire: Safran Electronics & Defense, 75015 Paris (FR)
(72) Inventeur: RIOU, Jean-Christophe, 75015 PARIS (FR); BAILLY, Eric, 75015 PARIS (FR)
(74) Mandataire: Prouvez, Julien
(86) Numéro de dépôt international: PCT/EP2016/062923
(87) Numéro de publication internationale: WO 2016/198414

(56) Documents cités:
- US-A- 5 317 917
- US-A1- 2007 277 616
- US-A1- 2015 090 041

## Description

La présente invention concerne le domaine de la mesure de pression, plus particulièrement dans le domaine aéronautique.

### ETAT DE LA TECHNIQUE

Un dispositif de détection de pression comprend un bâti sur lequel est fixé un capteur de pression. Le capteur de pression comprend un substrat portant une première électrode et une membrane qui porte une deuxième électrode en regard de la première électrode. La membrane est soumise à la pression du fluide à mesurer et est susceptible de se déformer sous cette pression de telle manière que la distance entre les électrodes, mesurée selon un axe normal aux électrodes varie en fonction de la pression. Les deux électrodes soumises à une tension électrique forment donc un condensateur dont la capacité varie en fonction de la pression, la mesure de cette capacité permettant de déterminer la pression.

Il existe également des dispositifs comportant d'autres moyens de mesurer la déformation de la membrane comme par exemple des jauges de contrainte.

Un inconvénient de ces dispositifs dans leur ensemble est que leur précision dépend de la température et des variations de celles-ci.

En effet, la membrane et le substrat étant généralement dans des matériaux différents, les variations de température font naître dans le dispositif des dilatations différentielles qui engendrent des contraintes altérant la déformation de la membrane et faussant donc la mesure de la pression. L'art antérieur est divulgué dans les documents US 5317917A, le US2015/090041 A1 et le US2007/277616 A1.

### OBJET DE L'INVENTION

Un but de l'invention est de fournir un moyen pour améliorer la précision des capteurs.

### BREF EXPOSE DE L'INVENTION

A cet effet, on prévoit, selon l'invention, un dispositif de détection de pression comprenant un bâti sur lequel est fixé un capteur de pression comprenant une membrane qui a une surface destinée à être soumise à un fluide sous pression et qui est agencée pour se déformer élastiquement en fonction de la pression, et des moyens de détermination de la déformation de la membrane selon un axe normal à un plan moyen de la membrane au repos. La membrane est portée par un cadre relié au bâti par une structure de découplage mécanique pour isoler la membrane de contrainte résultant d'une dilatation thermique différentielle entre le cadre et le bâti. La structure de découplage comporte une platine solidaire du cadre et des bras élastiquement déformables s'étendant entre la platine et le bâti de manière à transformer en mouvement résultant parallèle au plan moyen toute dilatation thermique différentielle entre le bâti et la platine. La platine, la membrane et le cadre sont en un même matériau et les bras comportent une portion incurvée, les portions incurvées l'étant dans un même sens de telle sorte que le mouvement résultant soit une rotation autour de l'axe normal.

La structure de découplage mécanique permet d'empêcher que les dilatations thermiques différentielles n'influent sur le comportement de la membrane, ou tout au moins limite l'effet des dilatations thermiques différentielles sur le comportement de la membrane.

L'élasticité des bras favorise la transformation des efforts thermiques internes au capteur en un mouvement de rotation sur la platine supportant le capteur. La portion incurvée des bras au niveau de la platine permet d'ajouter de la souplesse et d'homogénéiser les efforts thermiques subis par les bras. Le fait que les bras soient incurvés dans le même sens ésymétrise l'effort transmis entre les bras sur la platine et améliore encore la transformation des efforts thermiques internes en un mouvement de rotation dans le plan de la platine supportant le capteur. Un tel mouvement n'induit alors pas de déflexion parasite de la membrane et fiabilise la mesure de pression.

Selon une version particulièrement avantageuse de l'invention, le dispositif de détection de pression comprend un bâti sur lequel est fixé un capteur de pression comprenant une membrane qui a une surface destinée à être soumise à un fluide sous pression et qui est agencée pour se déformer élastiquement en fonction de la pression, et des moyens de détermination de la déformation de la membrane selon un axe normal à un plan moyen de la membrane au repos. Dans cette version, la membrane est portée par un cadre relié au bâti par une structure de découplage mécanique pour isoler la membrane de contrainte résultant d'une dilatation thermique différentielle entre le cadre et le bâti, et la structure de découplage comporte une platine solidaire du cadre et des bras élastiquement déformables s'étendant entre la platine et le bâti de manière à transformer en mouvement résultant parallèle au plan moyen toute dilatation thermique différentielle entre le bâti et la platine. La platine, la membrane et le cadre sont en un même matériau et la structure de découplage mécanique comprend un cadre intermédiaire.

Les bras permettent de transformer toute dilatation thermique différentielle entre la platine et le bâti en translation de la platine dans un plan perpendiculaire à l'axe normal, ce qui n'engendre aucun effort parasite sur la membrane susceptible de perturber la mesure de pression.

D'autres caractéristiques et avantages de l'invention ressortiront à la lecture de la description qui suit de modes de réalisation particuliers non limitatifs de l'invention.

### BREVE DESCRIPTION DES FIGURES

Il sera fait référence aux dessins annexés, parmi lesquels :
- la figure 1 est une vue schématique en coupe transversale d'un dispositif selon un premier mode de réalisation de l'invention;
- la figure 2 est une vue de dessus d'un dispositif selon le premier mode de réalisation de l'invention.

### DESCRIPTION DETAILLEE DE L'INVENTION

En référence aux figures, le dispositif de détection de pression comprend un bâti 1 sur lequel est fixé un capteur de pression généralement désigné en 2. Le capteur de pression 2 comprend une membrane 3 qui a une surface 4 destinée à être soumise à un fluide sous pression et qui est agencée pour se déformer élastiquement en fonction de la pression. Le capteur de pression 2 comprend en outre des moyens de détermination de la déformation de la membrane 3 selon un axe 5 normal à un plan moyen de la membrane 3 au repos.

Selon l'invention, la membrane 3 est portée par un cadre 6 en un même matériau que la membrane 3. Le cadre 6 est porté par une structure de découplage mécanique, généralement désignée en 7, reliée au bâti 1 et agencée pour isoler la membrane 3 de contrainte résultant d'une dilatation thermique différentielle entre le cadre 6 et le bâti 1.

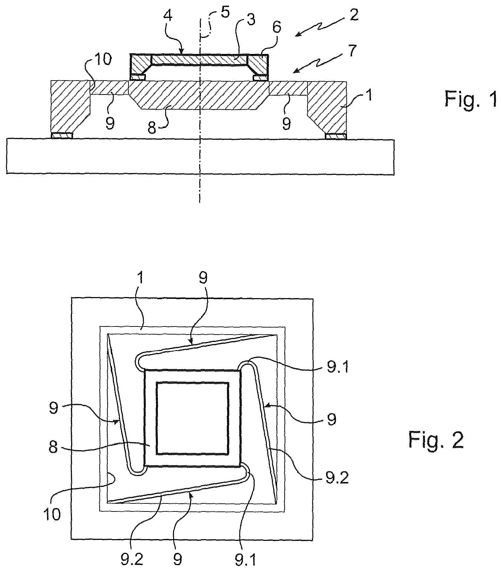

Selon le premier mode de réalisation représenté sur les figures 1 à 3, la structure de découplage 7 comporte une platine 8 solidaire du cadre 6 et des bras 9 s'étendant entre la platine 8 et le bâti 1. La platine 8, la membrane 3 et le cadre 6 sont en un même matériau. Les bras 9 sont élastiquement déformables de manière à transformer en mouvement résultant parallèle au plan moyen toute dilatation thermique différentielle entre le bâti 1 et la platine 8.

Plus précisément ici, la platine 8 a un pourtour sensiblement rectangulaire et est monté dans un logement 10 du bâti 1 de contour rectangulaire, les bras 9 reliant le pourtour de la platine 8 à la paroi du logement 10.

En référence à la figure 2, les bras 9 comportent une portion incurvée 9.1 reliée à la platine 8 et une portion rectiligne 9.2 reliée au bâti 1.

Les portions incurvées 9.1 sont incurvées dans un même sens. La portion incurvée 9.1 de chaque bras 9 est solidaire de la platine 8 au voisinage d'un des angles de la platine 8.

Chaque portion rectiligne 9.2 s'étend selon une direction qui est comprise dans un plan parallèle à la membrane 3 au repos mais qui n'est pas sécante de l'axe normal 5. La portion rectiligne 9.2 de chaque bras 9 est solidaire du bâti 1 au voisinage d'un des angles du logement 10, ledit angle étant l'angle voisin de celui se trouvant en regard de l'angle de la platine 8 auquel la portion incurvée 9.1 du même bras 9 est reliée. Les portions rectilignes 9.2 s'étendent symétriquement par rapport à l'axe normal 5.

Les bras 9 permettent de transformer toute dilatation thermique différentielle entre la platine 8 et le bâti 1 en un mouvement résultant constitué d'une rotation autour de l'axe normal 5.

Dans le premier mode de réalisation, les moyens de détermination, connus en eux-mêmes, comprennent par exemple une première électrode solidaire de la platine 8 et une deuxième électrode portée par la membrane 3 en regard de la première électrode. Ainsi, lorsque la membrane 3 est soumise à la pression du fluide à mesurer, elle se déforme sous cette pression de telle manière que la distance entre les électrodes, mesurée selon l'axe 5 varie en fonction de la pression. Les deux électrodes soumises à une tension électrique forment donc un condensateur dont la capacité varie en fonction de la pression, la mesure de cette capacité permettant de déterminer la pression. A cette fin, les électrodes sont reliées à une unité de commande, connue en elle-même et non représentée ici, par des fils ayant une longueur et une souplesse suffisantes pour ne pas entraver les mouvements de la platine 8.

L'élément sensible peut comprendre une membrane sensible à la pression et une cavité arrière pour enfermer une pression de référence qui peut être le vide.

Dans ce cas, les moyens de détermination, connus en eux-mêmes, comprennent des jauges de contrainte fixées à la membrane 3 pour en mesurer la déformation. Les jauges de contrainte sont reliées à une unité de commande, non représentée ici, par des fils ayant une longueur et une souplesse suffisantes pour ne pas entraver les mouvements du cadre 6.

Bien entendu, l'invention n'est pas limitée aux modes de réalisation décrits mais englobe toute variante entrant dans le champ de l'invention telle que définie par les revendications.

En particulier, le dispositif peut avoir d'autres formes que celle décrite. La membrane peut par exemple avoir une forme circulaire.

## Revendications

1. Dispositif de détection de pression comprenant un bâti (1) sur lequel est fixé un capteur de pression (2) comprenant une membrane (3) qui a une surface destinée à être soumise à un fluide sous pression et qui est agencée pour se déformer élastiquement en fonction de la pression, et des moyens de détermination de la déformation de la membrane (3) selon un axe normal à un plan moyen de la membrane (3) au repos, **caractérisé en ce que** la membrane (3) est portée par un cadre (6) relié au bâti (1) par une structure de découplage mécanique (7) pour isoler la membrane (3) de contrainte résultant d'une dilatation thermique différentielle entre le cadre (6) et le bâti (1) et **en ce que** la structure de découplage (7) comporte une platine (8) solidaire du cadre (6) et des bras élastiquement déformables (9) s'étendant entre la platine (8) et le bâti (1) de manière à transformer en mouvement résultant parallèle au plan moyen toute dilatation thermique différentielle entre le bâti (1) et la platine (8), la platine, la membrane (3) et le cadre (6) sont en un même matériau, les bras (9) comportant une portion incurvée, les portions incurvées l'étant dans un même sens de telle sorte que le mouvement résultant soit une rotation autour de l'axe normal.

2. Dispositif selon la revendication 1, dans lequel les bras (9) comportent une portion rectiligne s'étendant selon une direction non sécante de l'axe normal, les portions rectilignes s'étendant symétriquement par rapport à l'axe normal.

3. Dispositif selon la revendication 2, dans lequel la platine (8) a un pourtour sensiblement rectangulaire et est logée dans un logement du bâti (1) de contour rectangulaire, la portion incurvée de chaque bras (9) étant solidaire de la platine (8) au voisinage d'un des angles de la platine (8) et la portion rectiligne de chaque bras (9) étant solidaire du bâti (1) au voisinage d'un des angles du logement.

## Patentansprüche

1. Vorrichtung zur Druckerfassung, umfassend ein Gestell (1), an dem ein Drucksensor (2) befestigt ist, der eine Membran (3) umfasst, die eine Oberfläche hat, die dazu bestimmt ist, einem Druckfluid ausgesetzt zu werden, und die ausgebildet ist, um sich in Abhängigkeit von dem Druck elastisch zu verformen, und Bestimmungsmittel zum Bestimmen der Verformung der Membran (3) entlang einer Achse, die normal zu einer Mittelebene der Membran (3) in Ruhestellung ist, **dadurch gekennzeichnet, dass** die Membran (3) von einem Rahmen (6) getragen wird, der mit dem Gestell (1) über eine Struktur (7) zur mechanischen Entkopplung verbunden ist, um die Membran (3) gegen Spannungen zu isolieren, die aus einer unterschiedlichen Wärmeausdehnung zwischen dem Rahmen (6) und dem Gesell (1) resultieren, und dass die Entkopplungsstruktur (7) eine fest mit dem Rahmen (6) verbundene Platte (8) und elastisch verformbare Arme (9) umfasst, die sich zwischen der Platte (8) und dem Gestell (1) derart erstrecken, dass sie jegliche unterschiedliche Wärmeausdehnung zwischen dem Gestell (1) und der Platte (8) in eine resultierende Bewegung umwandeln, die parallel zur Mittelebene ist, wobei die Platte, die Membran (3) und der Rahmen (6) aus einem gleichen Material sind, wobei die Arme (9) einen gebogenen Abschnitt umfassen, wobei die gebogenen Abschnitte in einer gleichen Richtung gebogen sind, sodass die resultierende Bewegung eine Drehung um die normale Achse ist.

2. Vorrichtung nach Anspruch 1, bei der die Arme (9) einen geraden Abschnitt umfassen, der sich in einer Richtung erstreckt, die die normale Achse nicht schneidet, wobei sich die geraden Abschnitte symmetrisch in Bezug auf die normale Achse erstrecken.

3. Vorrichtung nach Anspruch 2, bei der die Platte (8) einen im Wesentlichen rechteckigen Umfang hat und in einer Aufnahme des Gestells (1) mit rechteckiger Kontur untergebracht ist, wobei der gebogene Abschnitt jedes Arms (9) fest mit der Platte (8) in der Nähe einer der Ecken der Platte (8) verbunden ist und der gerade Abschnitt jedes Arms (9) fest mit dem Gestell (1) in der Nähe einer der Ecken der Aufnahme verbunden ist.

## Claims

1. A pressure detection device comprising a mount (1) whereon a pressure sensor (2) is attached which comprises a membrane (3) which has a surface intended to be subjected to a pressurized fluid and which is so arranged as to elastically deform according to pressure, and means for determining the deformation of the membrane along an axis normal to a mid-plane of the membrane (3) at rest, **characterized in that** the membrane (3) is supported by a frame (6) connected to the mount (1) by a mechanical decoupling structure (7) in order to isolate the membrane (3) from stress resulting from a differential thermal expansion between the frame (6) and the mount (1), and **in that** the decoupling structure (7) comprises a plate (8) integral with the frame (6) and elastically deformable arms (9) extending between the plate (8) and the mount (1) so as to transform any differential thermal expansion between the mount (1) and the plate (8) into a resulting movement parallel to the mid-plane, with the plate (8), the membrane (3) and the frame (6) being made of the same material, with the arms (9) having a curved portion, and with the curved portions being curved in the same direction so that the resulting movement is a rotation around the normal axis.

2. A device according to claim 1, wherein the arms (9) have a straight portion extending along a direction not intersecting the normal axis, with the straight portions extending symmetrically relative to the normal axis.

3. A device according to claim 2, wherein the plate (8) has a substantially rectangular perimeter and is accommodated in a recess of the mount (1) having a rectangular perimeter, with the curved portion of each arm (9) being integral with the plate 8) in the vicinity of one of the corners of the plate (8) and the straight portion of each arm being integral with the mount (1) in the vicinity of one of the corners of the recess.
